# EUROPÄISCHE PATENTANMELDUNG

(11) **EP 2 416 051 A1**
(43) Veröffentlichungstag der Anmeldung: **08.02.2012**
(21) Anmeldenummer: 11172567.7
(22) Anmeldetag: 04.07.2011
(51) Int. Cl.: F16N 7/32, F03D 11/00, F16H 57/04

(54) **Vorrichtung zur Sprühschmierung eines Windturbinengetriebes**

(30) Priorität: 03.08.2010 DE 102010033228
(71) Anmelder: Siemens Aktiengesellschaft, 80333 Munich (DE)
(72) Erfinder: Nguyen, Cong, 52074 Aachen (DE); Brasseur, Michaela, 52072 Aachen (DE)

(57) **Zusammenfassung**

Die vorliegende Erfindung bezieht sich auf eine Vorrichtung zur Sprühschmierung eines Windturbinengetriebes. Die Vorrichtung umfasst ein von einem Gehäuse umschlossenes Getriebe (G1, G2, W1, W2, L1, L2, L3, L4), eine erste Ölsprüheinheit (OS1) und eine zweite Ölsprüheinheit (OS2). Beide Ölsprüheinheiten (OS1, OS2) sind im Innern des Gehäuses angeordnet. Die erste Ölsprüheinheit (OS1) ist ausgebildet, um Öl mit einer ersten Temperatur im Innern des Getriebegehäuses zu versprühen, während die zweite Ölsprüheinheit (OS2) ausgebildet ist, um Öl mit einer zweiten Temperatur im Innern des Getriebegehäuses zu versprühen, wobei sich die erste und die zweite Temperatur voneinander unterscheiden.

## Beschreibung

Die vorliegende Erfindung betrifft eine Vorrichtung und ein Verfahren zur Sprühschmierung eines Windturbinengetriebes.

Um die Abnutzung eines Getriebes möglichst gering zu halten, ist es erforderlich, dass die einzelnen Getriebeelemente, z.B. die Zähne zweier ineinander greifender Stirnräder, keinen direkten Metall-Metall-Kontakt haben. Aus diesem Grund ist es wichtig, für eine ausreichende Schmierung zu sorgen, so dass alle Metalloberflächen von einem Öl- bzw. Schmierfilm benetzt sind.

In der Anfangsphase oder nach längeren Standzeiten von Windturbinengetrieben besteht jedoch die Gefahr, dass dieser Film nicht auf alle Metalloberflächen in ausreichendem Maße gelangt. Aufgrund des fehlenden Schmierfilms kann es dann zum direkten Metall-Metall-Kontakt kommen, der eine erhöhte Reibung und Abnutzung der betroffenen Getriebeteile, z.B. in Form von Rattermarken, zur Folge hat. Dadurch erhöht sich das Risiko eines Getriebeausfalls.

Um diesem Problem zu begegnen werden Ölspritz- bzw. Ölsprüheinrichtungen verwendet, die das Windturbinengetriebe kurz vor der Wiederinbetriebnahme mit Öl bespritzen oder besprühen, um die Metalloberflächen mit einem Ölfilm zu benetzen. Dennoch fallen vergleichsweise viele Windturbinengetriebe kurz nach dem Wiederanlauf wegen unzureichender Ölbenetzung von Metallteilen aus.

Der vorliegenden Erfindung liegt daher die Aufgabe zugrunde, eine Vorrichtung zur Sprühschmierung eines Windturbinengetriebes vorzuschlagen, die eine verbesserte Sprühschmierung der Getriebeteile ermöglicht.

Erfindungsgemäß wird diese Aufgabe gelöst durch die Vorrichtung gemäß Anspruch 1 und das Verfahren gemäß Anspruch 7.

Vorteilhafte Weiterbildungen der Erfindung sind in den jeweiligen Unteransprüchen definiert.

Die vorliegende Erfindung bezieht sich auf eine Vorrichtung zur Sprühschmierung eines Windturbinengetriebes. Die Vorrichtung umfasst ein von einem Gehäuse umschlossenes Getriebe, eine erste Ölsprüheinheit und eine zweite Ölsprüheinheit. Beide Ölsprüheinheiten sind im Innern des Gehäuses angeordnet.

Die erste Ölsprüheinheit ist ausgebildet, um Öl mit einer ersten Temperatur im Innern des Getriebegehäuses zu versprühen und die zweite Ölsprüheinheit ist ausgebildet, um Öl mit einer zweiten Temperatur im Innern des Getriebegehäuses zu versprühen. Dabei unterscheiden sich die erste Temperatur und die zweite Temperatur voneinander.

Die vorliegende Erfindung bezieht sich außerdem auf ein Verfahren zur Sprühschmierung eines in einem Gehäuse angeordneten Windturbinengetriebes, bei dem zumindest zwei Öle, die sich voneinander in ihrer Temperatur unterscheiden, in das Gehäuse eingesprüht werden.

Die erfindungsgemäße Vorrichtung und das erfindungsgemäße Verfahren haben den Vorteil, dass sich die Ölpartikel des eingesprühten Öls aufgrund ihrer unterschiedlichen Temperatur unterschiedlich bewegen und dadurch insgesamt besser im Gehäuse verteilen. Das führt zu einer gleichmäßigeren Benetzung der Getriebeteile und somit zu einer besseren Schmierung im Vergleich zu bekannten Vorrichtungen und Verfahren dieser Art.

Gemäß einer Ausführungsform der Erfindung ist die Temperaturdifferenz der eingesprühten Öle dabei derart gewählt, dass ein Teil der Ölpartikel temperaturbedingt im Gehäuse aufsteigt und ein Teil der Ölpartikel temperaturbedingt im Gehäuse absinkt. Durch eine entsprechende Anordnung der Einsprüheinheiten wird das Aufsteigen und Absinken der Ölpartikel ebenfalls unterstützt.Durch Vermischung der aufsteigenden und absinkenden Ölpartikel entsteht dann nach dem Einsprühen ein Ölnebel, der sich dynamisch im Inneren des Gehäuses bewegt. Dies ermöglicht auf einfache und kostengünstige Weise eine besonders gleichmäßige Benetzung der Getriebeteile mit Öl.

Ausführungsformen der Erfindung werden beispielhaft mit Bezug auf die angehängte Zeichnung beschrieben, in der:

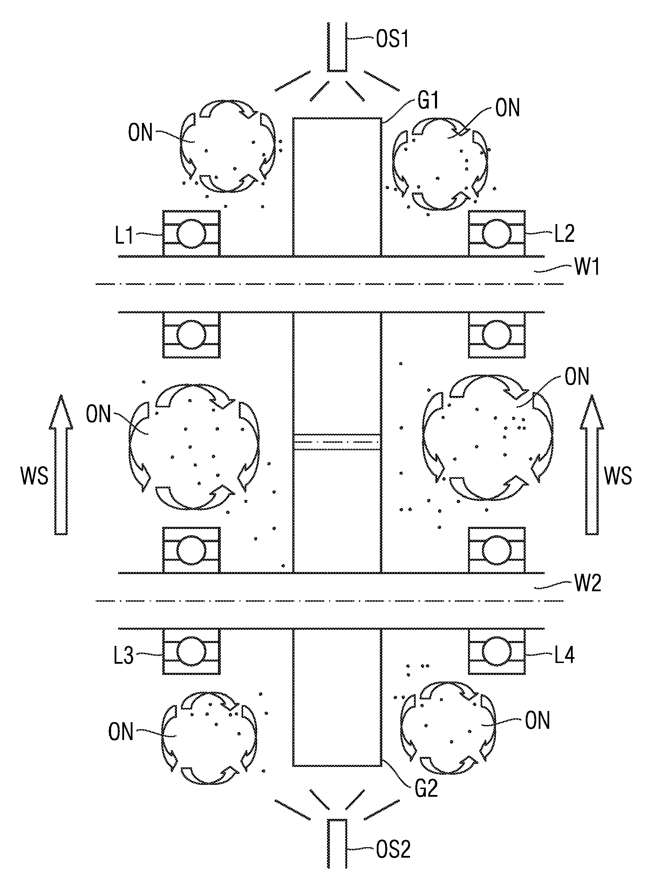

FIG 1 schematisch die erfindungsgemäße Vorrichtung zur Sprühschmierung eines Windturbinengetriebes zeigt.

Die erfindungsgemäße Vorrichtung umfasst ein Getriebe, welches in **FIG 1** schematisch mit zwei Stirnrädern G1, G2, zwei Getriebewellen W1, W2 und vier Lagern L1, L2, L3, L4 dargestellt ist. Das Getriebe G1, G2, W1, W2, L1, L2, L3, L4 ist von einem nicht dargestellten Getriebegehäuse umgeben.

Die erfindungsgemäße Vorrichtung umfasst außerdem zwei Ölsprüheinrichtungen OS1, OS2, die zusammen ein Ölsprühsystem bilden. Die Ölsprüheinrichtungen OS1, OS2 sind räumlich getrennt voneinander am Getriebegehäuse angeordnet und zwar so, dass sich zumindest ihr Sprühkopf innerhalb des Gehäuses befindet. In einer bevorzugten Ausführungsform sind die Ölsprüheinrichtungen OS1, OS2 an der Innenseite des Getriebegehäuses angebracht.

Neben den beiden in FIG 1 teilweise gezeigten Sprüheinrichtungen OS1, OS2 können weitere Sprüheinrichtungen zum Ölsprühsystem gehören.

Die beiden Ölsprüheinrichtungen OS1, OS2 erzeugen Ölpartikel mit unterschiedlichen Durchmessern. In einer Ausführungsform der Erfindung sind die Ölsprüheinrichtungen so ausgebildet, dass sie Ölpartikel mit einem Durchmesser im Bereich von 1µm bis 20µm versprühen.

Das auszusprühende Öl wird vorgeheizt, um die gewünschte Viskosität zu erzielen. Dann wird es durch die Ölsprüheinrichtungen OS1, OS2 gepumpt. Wichtig dabei ist, dass Öl mit unterschiedlicher Temperatur von den Ölsprüheinrichtungen ausgesprüht wird.

Die Ölsprüheinrichtungen (OS1, OS2) können an verschiedenen Stellen am Getriebegehäuse angeordnet sein und aus verschiedenen Winkeln Öl auf das Getriebe sprühen. Besonders vorteilhaft ist es allerdings, eine erste Ölsprüheinrichtung (OS1) oberhalb und eine zweite Ölsprüheinrichtung (OS2) unterhalb der bewegten Teile anzuordnen und das Öl senkrecht nach unten bzw. oben, in Richtung der Getriebeteile, zu versprühen, um eine gute Vermischung des Ölpartikel zu erreichen.

Diese vorteilhafte Ausführungsform ist in FIG 1 gezeigt. Die erste Ölsprüheinrichtung (OS1) ist oberhalb der bewegten Teile angeordnet. Sie versprüht ein Öl, dessen Temperatur unterhalb der Temperatur des Öls liegt, welches von der zweiten Ölsprüheinrichtung versprüht wird. Das heißt, die obere Ölsprüheinrichtung versprüht das vergleichsweise "kühlere" Öl.

Wie ebenfalls in FIG1 gezeigt, ist die zweite Ölsprüheinrichtung (OS1) unterhalb der bewegten Teile des Getriebes angeordnet. Sie versprüht ein Öl, dessen Temperatur oberhalb der Temperatur des Öls liegt, welches von der ersten Ölsprüheinrichtung (OS2) versprüht wird. Das heißt, diese untere Ölsprüheinrichtung versprüht ein Öl mit einer vergleichsweise "höheren" Temperatur.

In FIG 1 ist das Aufsteigen der Ölpartikel mit "höherer" Temperatur als "Wärmestrom" durch nach oben gerichtete Pfeile WS angedeutet.

Die von der ersten und zweiten Ölsprüheinrichtung (OS1, OS2) versprühten Ölpartikel vermischen sich im Innern des Getriebegehäuses. Dabei entsteht aufgrund der unterschiedlichen Temperatur und Bewegungsrichtung der Ölpartikel ein Ölnebel der seine Lage innerhalb des Getriebegehäuses dynamisch ändert.

In FIG 1 wird dieser "Ölnebel" ON durch kreisförmig angeordnete Pfeile verdeutlicht.

Die Temperaturdifferenz zwischen erster und zweiter Temperatur wird dabei derart gewählt, dass ein Teil der Ölpartikel des versprühten Öls nach oben steigt und ein Teil der Ölpartikel des versprühten Öls nach unten sinkt, so dass der durch Vermischung dieser steigenden und sinkenden Ölpartikel sich bildende Ölnebel (ON) seine Position im Inneren des Gehäuses ändert.

In einer Ausführungsform der Erfindung liegt die Temperaturdifferenz zwischen erster und zweiter Temperatur im Bereich von 40°C bis 60°C.

In einer bevorzugten Ausführungsform der Erfindung wird von der ersten Ölsprüheinheit (OS1) ein Öl mit einer Temperatur von 40°C versprüht, während von der zweiten Ölsprüheinheit (OS2) ein Öl mit einer Temperatur von 90°C versprüht wird.

Die beschriebene erfindungsgemäße Vorrichtung und das erfindungsgemäße Verfahren ermöglichen eine gleichmäßigere Benetzung der Getriebeteile mit Getriebeöl im Vergleich zu bekannten Vorrichtungen und Verfahren dieser Art. Die Verwendung der erfindungsgemäßen Vorrichtung führt zu einer deutlich höheren Betriebssicherheit des Getriebes einer Windturbine. Dadurch reduzieren sich die Ausfallzeiten wegen Reparaturarbeiten und auch die Wartungskosten.

## Patentansprüche

1. Vorrichtung zur Sprühschmierung eines Windturbinengetriebes
- mit einem von einem Gehäuse umschlossenen Getriebe (G1, G2, W1, W2, L1, L2, L3, L4),
- mit einer ersten Ölsprüheinheit (OS1),
- mit einer zweiten Ölsprüheinheit (OS2),
- bei der die erste Ölsprüheinheit (OS1) und die zweite Ölsprüheinheit (OS2) im Innern des Gehäuses angeordnet sind,
**dadurch gekennzeichnet,**
- **dass** die erste Ölsprüheinheit (OS1) ausgebildet ist, um Öl mit einer ersten Temperatur im Innern des Getriebegehäuses zu versprühen,
- **dass** die zweite Ölsprüheinheit (OS2) ausgebildet ist, um Öl mit einer zweiten Temperatur im Innern des Getriebegehäuses zu versprühen, und
- **dass** die erste und die zweite Temperatur sich voneinander unterscheiden.

2. Vorrichtung nach Anspruch 1, **dadurch gekennzeichnet,**
**dass** die Differenz zwischen erster und zweiter Temperatur und/oder die Anordnung der Ölsprüheinheiten (OS1,OS2) derart gewählt ist, dass ein Teil von Ölpartikeln des versprühten Öls nach oben steigt und ein Teil der Ölpartikel des versprühten Öls nach unten sinkt und dass durch Vermischung der steigenden und sinkenden Ölpartikel ein Ölnebel (ON) entsteht, dessen Position sich im Inneren des Gehäuses ändert.

3. Vorrichtung nach einem der vorstehenden Ansprüche, **dadurch gekennzeichnet,**
**dass** die Temperaturdifferenz zwischen der ersten und der zweiten Temperatur im Bereich von 40°C bis 60°C angeordnet ist.

4. Vorrichtung nach einem der vorstehenden Ansprüche, **dadurch gekennzeichnet,**
- **dass** die erste Ölsprüheinheit (OS1) zum Versprühen von Öl mit einer Temperatur von 40°C ausgebildet ist, und/oder
- **dass** die zweite Ölsprüheinheit (OS2) zum Versprühen von Öl mit einer Temperatur von 90°C ausgebildet ist.

5. Vorrichtung nach einem der vorstehenden Ansprüche, **dadurch gekennzeichnet,**
- **dass** die erste Ölsprüheinheit (OS1) oberhalb von bewegten Teilen des Getriebes (G1, G2, W1, W2, L1, L2, L3, L4) angeordnet ist, und/oder
- **dass** die zweite Ölsprüheinheit (OS2) unterhalb von bewegten Teilen des Getriebes (G1, G2, W1, W2, L1, L2, L3, L4) angeordnet ist.

6. Vorrichtung nach einem der vorstehenden Ansprüche, **dadurch gekennzeichnet,**
**dass** die Ölsprüheinheiten (OS1, OS2) derart ausgebildet sind, dass sie Ölpartikel mit einem Durchmesser im Bereich von 1µm bis 20µm versprühen.

7. Verfahren zur Sprühschmierung eines in einem Gehäuse angeordneten Windturbinengetriebes, bei dem zumindest zwei Öle, die sich voneinander in ihrer Temperatur unterscheiden, in das Gehäuse eingesprüht werden.

8. Verfahren nach Anspruch 7, bei dem die zwei Öle mit einer solchen Temperaturdifferenz eingesprüht werden, dass ein Teil von Ölpartikeln des versprühten Öls nach oben steigt und ein Teil der Ölpartikel des versprühten Öls nach unten sinkt, so dass durch Vermischung der steigenden und sinkenden Ölpartikel ein Ölnebel (ON) entsteht, dessen Position sich im Inneren des Gehäuses ändert.

9. Verfahren nach Anspruch 7, bei dem die Einsprühung der Öle im Gehäuseinneren derart erfolgt, dass ein Teil von Ölpartikeln des versprühten Öls nach oben steigt und ein Teil der Ölpartikel des versprühten Öls nach unten sinkt und dass sich die steigenden und sinkenden Ölpartikel mischen, so dass ein Ölnebel (ON) entsteht, dessen Position sich im Inneren des Gehäuses ändert.
